(19) Europäisches Patentamt / European Patent Office / Office européen des brevets

(11) **EP 3 008 422 B1**

(12) **EUROPEAN PATENT SPECIFICATION**

(45) Date of publication and mention
of the grant of the patent:
**01.11.2017 Bulletin 2017/44**

(21) Application number: **14810672.7**

(22) Date of filing: **06.06.2014**

(51) Int Cl.:
***G01C 9/00*** *(2006.01)*

(86) International application number:
**PCT/US2014/041253**

(87) International publication number:
**WO 2014/200835 (18.12.2014 Gazette 2014/51)**

(54) **TIP-OVER SENSOR**

KIPPSENSOR

CAPTEUR DE CHAVIRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2013 US 201361835104 P
04.06.2014 US 201414295864**

(43) Date of publication of application:
**20.04.2016 Bulletin 2016/16**

(73) Proprietor: **Memsic, Inc.
Andover, MA 01810 (US)**

(72) Inventors:
• **DRIBINSKY, Alexander
Naperville, IL 60540 (US)**
• **KATSUMOTO, Kenichi
Tokyo 206-0034 (JP)**
• **SUN, Hongzhi
Naperville, IL 60540 (US)**
• **NEWTON, John
Andover, MA 01810 (US)**

(74) Representative: **Awapatent AB**
**P.O. Box 5117**
**200 71 Malmö (SE)**

(56) References cited:
DE-A1-102008 042 006    JP-A- 2008 185 513
US-A- 5 493 909    US-A- 5 600 066
US-A1- 2004 172 838    US-A1- 2007 254 738
US-A1- 2013 041 577    US-B2- 7 231 825
US-B2- 7 650 252

**Description**

BACKGROUND OF THE INVENTION

It is well-known that accelerometers can be used to measure an angle of inclination of an apparatus. A Digital Thermal Orientation Sensor (DTOS) device, available from MEMSIC, Inc., Andover, MA can be used to measure an inclination angle in order to determine if the apparatus is being operated within its parameters. An indication that the apparatus has tipped beyond some predetermined angle, i.e., it has "tipped over," may require intervention in order to maintain safe operating conditions. JP 2008 185513 A discloses a tilt angle sensor capable of detecting a three-dimensional tilt, the tilt angle sensor having an acceleration sensor, the acceleration sensor having at least mutually orthogonal first and second sensitivity axes, the tilt angle sensor further including calculation means for finding a first tilt angle being a rotational angle of the first sensitivity axis and a second tilt angle being a rotational angle of the second sensitivity axis from the sum and subtraction of obtained output by finding the sum and subtraction of the output concerning the first and second sensitivity axes of the acceleration sensor.

DE 10 2008 042006 A1 discloses a method for activating a security unit of a vehicle. The method involves receiving a longitudinal sensor value and a transverse sensor value and activating the security unit once a predetermined threshold is exceeded.

US 2004/172838 A1 discloses a method for measuring a directional of a body in a three-dimensional space defined by an X-axis, a Y-axis, and a Z-axis.

US 5 493 909 A discloses a method of and an apparatus for detecting an angular velocity and a rotation angle of a rotary member. First and second accelerations at first and second points of the rotary member are detected, respectively.

An accelerometer used to determine an inclination angle is, oftentimes, placed in an environment that subjects it to noise, vibration and other adverse conditions. In addition, accelerometers are often used in handheld devices and, therefore, need to be as small as possible while meeting high levels of reliability.

What is needed, therefore, is an accelerometer that is accurate and reliable under harsh conditions, easily configured and inexpensive.

BRIEF SUMMARY OF THE INVENTION

A tip-over sensor or detector that, upon sensing of a tipping or tipped condition, provides a signal indicative of that condition. The output signal can be employed to trigger an alarm or to shut down a device, for example, but not limited to, a motorcycle, space heater, iron, etc., that has tipped over or to otherwise denote the tip-over condition. The present invention therefore relates to a tip-over sensor according to claim 1. Claims 2-10 relate to preferred embodiments of the present invention.

BRIEF DESCRIPTION OF THE SEVERAL VIEWS OF THE DRAWINGS

Various aspects of at least one embodiment of the present invention are discussed below with reference to the accompanying figures. It will be appreciated that for simplicity and clarity of illustration, elements shown in the drawings have not necessarily been drawn accurately or to scale. For example, the dimensions of some of the elements may be exaggerated relative to other elements for clarity or several physical components may be included in one functional block or element. Further, where considered appropriate, reference numerals may be repeated among the drawings to indicate corresponding or analogous elements. For purposes of clarity, not every component may be labeled in every drawing. The figures are provided for the purposes of illustration and explanation and are not intended as a definition of the limits of the invention. In the figures:

Fig. 1 is a conceptual representation of an embodiment of the present invention on a motorcycle;
Fig. 2 is a representation of a coordinate system in accordance with an embodiment of the present invention;
Fig. 3 is a functional block diagram of a tip sensor in accordance with an embodiment of the present invention;
Fig. 4 is a schematic diagram of a tip sensor in accordance with an embodiment of the present invention corresponding to that shown in Fig. 3;
Fig. 5 is a block diagram of a programmable capacitor;
Figs. 6 and 7 are functional block diagrams of the tip sensor of Fig. 4 at different stages of operation;
Fig. 8 is a functional block diagram of a tip sensor in accordance with an embodiment of the present invention;
Figs. 9-11 are functional block diagrams of the tip sensor of Fig. 8 at different stages of operation;
Fig. 12 is a functional block diagram of a tip sensor in accordance with an embodiment of the present invention; and
Fig. 13 is a flowchart of a method of operation of a tip sensor.

DETAILED DESCRIPTION OF THE INVENTION

In the following description, numerous specific details are set forth in order to provide a thorough understanding of the embodiments of the present invention. It will be understood by those of ordinary skill in the art that these embodiments of the present invention may be practiced without some of these specific details. In other instances, well-known methods, procedures, components and structures may not have been described in detail so as not to obscure the embodiments of the present invention.

Prior to explaining at least one embodiment of the present invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein are for the purpose of description and should not be regarded as limiting.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination.

The present invention provides a tip-over sensor that utilizes, in one embodiment, a MEMS thermal accelerometer that is extremely robust, reliable and shock tolerant. The device is particularly well suited to harsh or high vibration environments such as for use in motorcycles and other vehicles.

A tip-over sensor in accordance with the invention can be implemented, in one embodiment, to provide an interface for a user to program, i.e., to choose, a tip-over threshold angle from a plurality of thresholds. If the device orientation with respect to a reference exceeds the programmed tip-over threshold angle, a digital output changes state to provide an alert of a tip-over, or fall down, event. In another embodiment, the threshold angle can be preprogrammed, i.e., pre-selected or hard-wired, into the device.

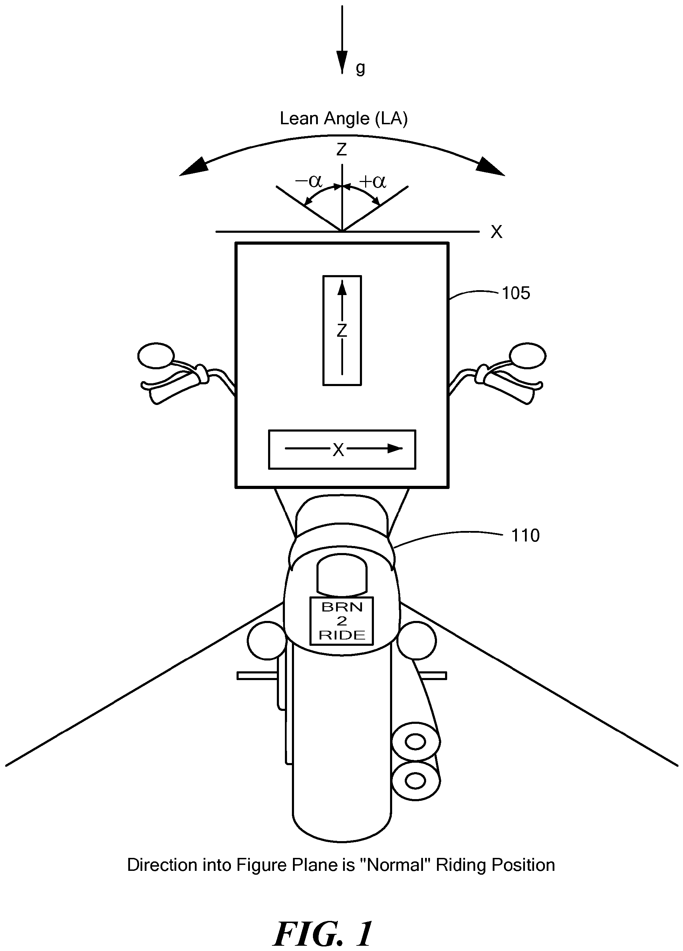

Referring now to Fig. 1, a two-axis accelerometer 105, or sensor 105, (not to scale), is mounted on, for example, a motorcycle 110. It has two axes of sensitivity: X and Z. When the motorcycle 110 is in "normal" riding position, i.e., vertical, the sensor 105 senses 1g of acceleration on the Z-axis and 0g acceleration on the X-axis. If the motorcycle 110 leans to one side, the sensor 105 will register a smaller acceleration value on the Z-axis, and a nonzero acceleration value on the X-axis. The X-axis signal value may be positive or negative depending on whether the motorcycle 110 is leaning to the left or to the right, looking in the direction toward the front wheel, i.e., the normal orientation of an operator or rider.

Now, consider, if a lean angle (LA) is equal to a predetermined tip-over threshold angle ($\alpha$), the following relationship will hold if the motorcycle 110 is leaning to the right:

$$Z = 1g * \cos(\alpha) \qquad \text{Eq. (1)}$$

$$X = 1g * \sin(\alpha) \qquad \text{Eq. (2)}$$

Equations 1 and 2 can be rewritten as:

$$Z * \sin(\alpha) = X * \cos(\alpha) \qquad \text{Eq. (3)}$$

For purposes of explaining an embodiment of the present invention, both sides of Eq. (3) are multiplied by a coefficient based on two scale factors, a and b. The values for a and b are chosen such that the following ratio is satisfied:

$$a/b = \tan(\alpha) \qquad \text{Eq. (4)}$$

Eq. (3) can be re-written as:

$$a * Z = b * X \qquad \text{Eq. (5)}$$

Or, as:

$$a * Z - b * X = 0 \qquad \text{Eq. (6)}$$

If the motorcycle 110 is leaning to the left, and the tip-over threshold angle is still $\alpha$ (or -$\alpha$ to be mathematically correct), Eqs. 5 and 6 become:

$$a * Z = -b * X \qquad \text{Eq. (7)}$$

and:

$$a * Z + b * X = 0 \qquad \text{Eq. (8)}$$

For discussion purposes, an orientation vector of the motorcycle 110 is defined as going through the spine of the rider, starting at her seat and exiting at her head, i.e., the Z-axis.

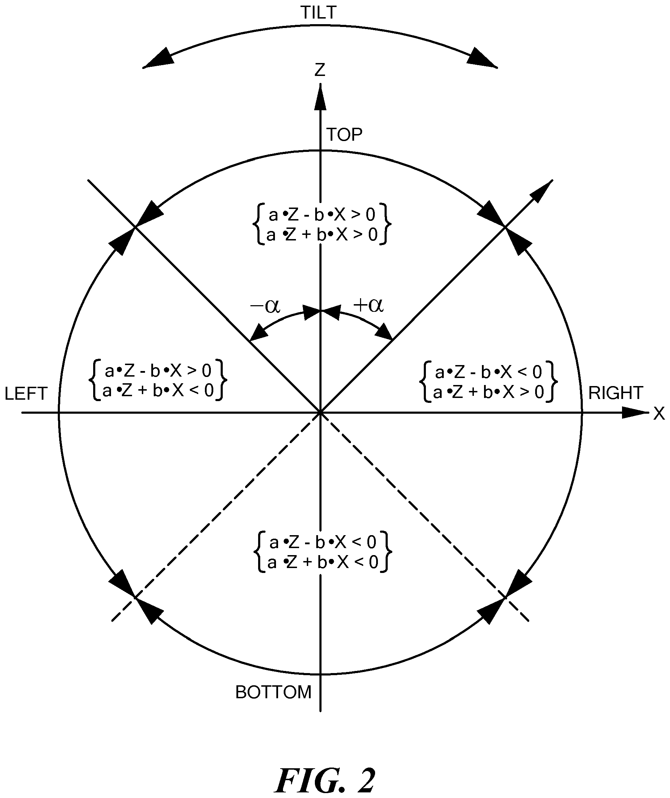

Referring now to Fig. 2, the possible orientation of the motorcycle 110 is considered to be in one of four quadrants: TOP, RIGHT, BOTTOM and LEFT. These quadrants are limited by the boundaries defined by the tip-over threshold angle $\alpha$.

If the orientation vector of the motorcycle 110, i.e., the lean angle (LA) is in the TOP quadrant, the following is true:

$$a * Z - b * X > 0 \qquad \text{Eq. (9)}$$

$$a * Z + b * X > 0 \qquad \text{Eq. (10)}$$

If the orientation vector of the motorcycle 110 is in the RIGHT quadrant, the following is true:

$$a * Z - b * X < 0 \qquad \text{Eq. (11)}$$

$$a * Z + b * X > 0 \qquad \text{Eq. (10)}$$

If the orientation vector of the motorcycle 110 is in the BOTTOM quadrant, the following is true:

$$a * Z - b * X < 0 \qquad \text{Eq. (11)}$$

$$a * Z + b * X < 0 \qquad \text{Eq. (12)}$$

The BOTTOM orientation is unlikely to occur with a motorcycle, but is easily achievable with a watercraft, such as a jet ski or similar vehicle, where this orientation most likely indicates the watercraft is upside-down in the water and the operator, hopefully, unhurt and nearby treading water.

If the orientation vector of the motorcycle 110 is in the LEFT quadrant, the following is true:

$$a * Z - b * X > 0 \qquad \text{Eq. (9)}$$

$$a * Z + b * X < 0 \qquad \text{Eq. (12)}$$

Thus, by evaluating the signs of each of the two quantities (a * Z - b * X) and (a * Z + b * X), it can be determined whether or not the lean angle LA exceeds the tip-over threshold angle $\alpha$.

In an actual implementation, e.g., on the motorcycle referenced above, because earth's gravity vector g points "down," a sensor in accordance with the embodiments described herein would be mounted with its positive Z-axis orientation also directed "downward." One of ordinary skill in the art would understand, therefore, that the Z-axis would be pointed downward in Fig. 2 and that the formulae for the TOP and BOTTOM quadrants would be swapped.

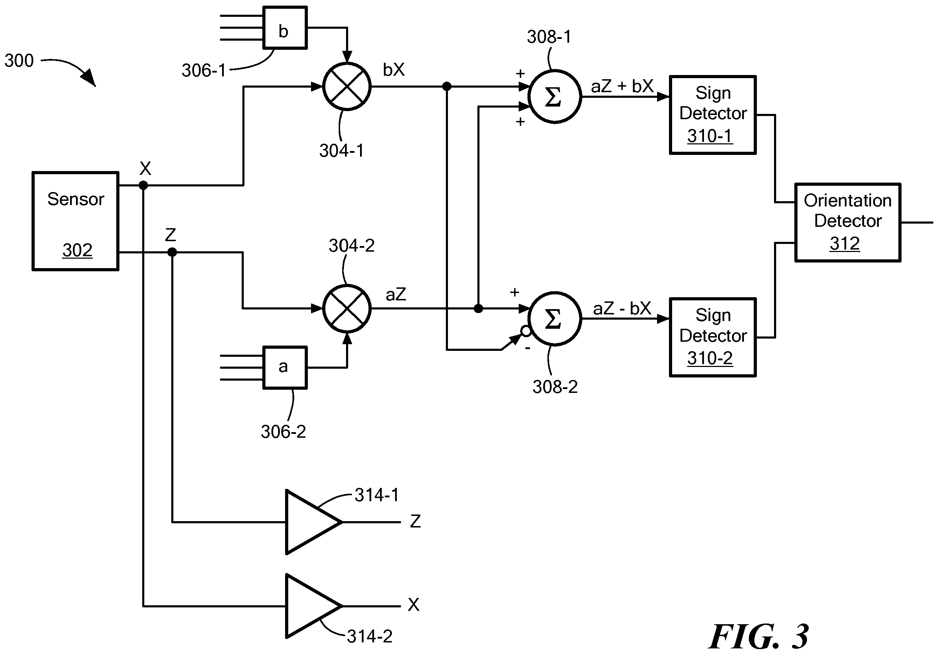

Referring now to Fig. 3, in one embodiment of the present invention a tip-over sensor system 300 includes a two-axis accelerometer 302 that generates two voltages proportional to the X- and Z-axis accelerations, respectively. Two multipliers 304-1 and 304-2 are provided along with two programmable coefficient generators 306-1 and 306-2. The first programmable coefficient generator 306-1 is set to the "b" value while the second programmable coefficient generator 306-2 is set to the "a" coefficient value. The first multiplier provides the value b*X and the second multiplier 304-2 provides the value a*Z.

The outputs of the two-axis accelerometer 302 may be presented to signal conditioning circuits, e.g., pre-amplifiers, C/V converters, filters, offset adjustment circuits, etc., prior to being sent to the multipliers. Such signal conditioning circuits may either be externally provided with respect to the accelerometer or internally integrated.

In addition, the two multipliers 304-1 and 304-2 may be implemented using amplifiers with different gain values as is understood by one of ordinary skill in the art.

First and second summers 308-1, 308-2 are provided where the first summer 308-1 provides an output of (a*Z + b*X) and the second summer 308-2 provides an output equal to (a*Z - b*X) as the second summer 308-2 has an inverting input at which it receives the value b*X. A first sign detector 310-1 determines a sign of the output from the first summer 308-1 while a second sign detector 310-2 determines a sign of the output from the second summer 308-2. The respective outputs from the first and second sign detectors 310-1, 310-2 are received at an orientation detector 312 that provides a binary signal indicating the leaning condition of the sensor 302 with respect to the coefficient values a, b.

In addition, first and second amplifiers 314-1 and 314-2 are used to provide Z and X acceleration values directly.

Alternatively, the orientation detector 312 may include a logic function to determine which quadrant the device is in, e.g., generate a two-bit output based on the outputs of the first and second sign detectors 310-1, 310-2 and then a functional logic block to determine if the quadrant is allowed or not.

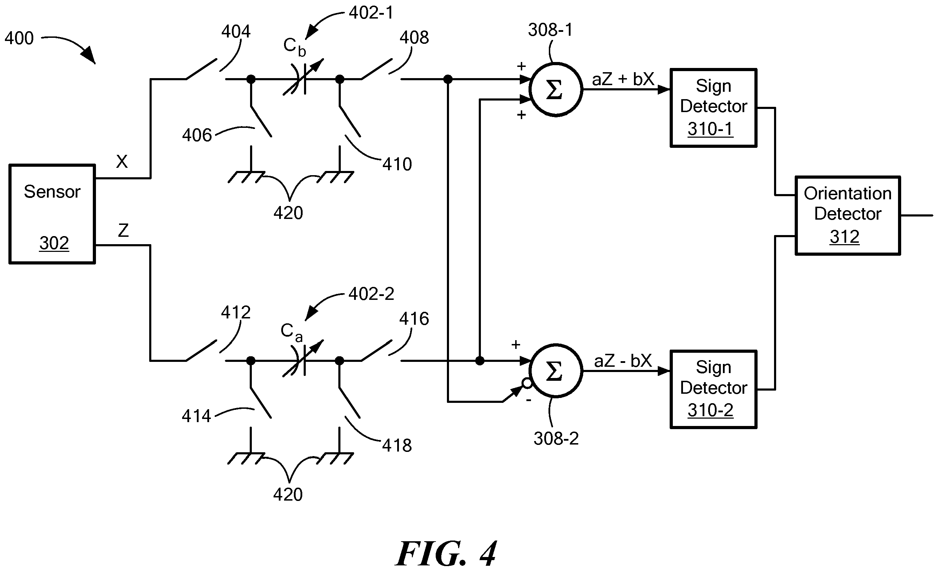

In an alternate embodiment of the present invention, referring now to Fig. 4, another tip-over sensor system 400 is provided that operates in similar fashion as the tip-over sensor system 300 shown in Fig. 3, however, the multipliers 304 and programmable coefficient generators 306 are replaced with adjustable capacitors and switches as will be described in more detail below.

The first multiplier 304-1 and corresponding programmable coefficient generator 306-1 are replaced by an adjustable capacitor 402-1 having a value of $C_b$ and a number of switches 404, 406, 408 and 410. Similarly, the second multiplier 304-2 and programmable coefficient generator 306-2 are replaced by a second adjustable capacitor 402-2 having a value of $C_a$ and switches 412, 414, 416 and 418. With respect to switches 406, 410, 414 and 418, one end is coupled to a node of the respective capacitor while the other end is coupled to an analog ground 420. Analog ground 420, however, is not necessarily a zero volt reference.

The adjustable capacitors 402-1, 402-2, and their corresponding switches, operate as a sampling capacitor to sample both positive and negative X and Z output voltages from the sensor 302. With this circuit of switched capacitors, the variable of interest is the charge built up on each of the capacitors. In order to establish the a/b ratio, the first capacitor 402-1 is set to a value of b picoFarads and the second capacitor 402-2 is set to a value of a picoFarads.

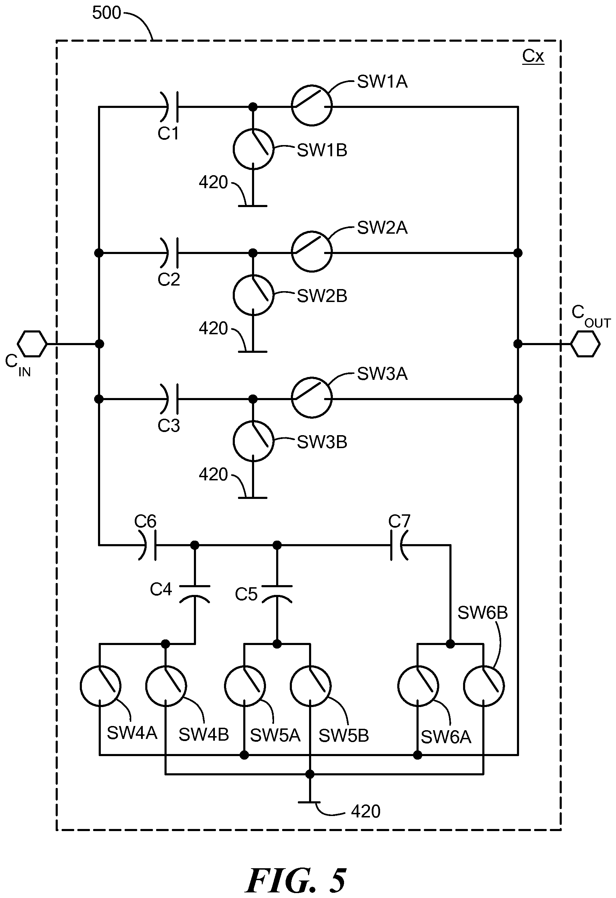

Each of the first and second capacitors 402-1, 402-2 is itself an adjustable capacitor module 500 as shown in Fig. 5. Here, in one non-limiting example, seven capacitors C1-C7 are arranged amongst six pairs of switches SW1A, SW1 B; SW2A, SW2B; SW3A, SW3B; SW4A, SW4B; SW5A, SW5B; and SW6A, SW6B. As is understood by one of ordinary skill in the art, by opening and closing specific switches, in order to place capacitors in parallel and/or in series with one another, or in equivalent t-network or π-network configurations, a number of different capacitive values can then be chosen, i.e., the a and b values described above, and presented across the output terminals $C_{IN}$ and $C_{OUT}$.

Control signals are sent to the switches to open and close the respective switches to obtain the desired capacitance value. In this embodiment, the six pairs of switches SW1A, SW1B, SW2A, SW2B, SW3A, SW3B, SW4A, SW4B, SW5A, SW5B, SW6A, SW6B are operated such that, in each pair, one is opened when the other is closed. Thus, for example, switches SW1A, SW1B are operated such that a first control signal is sent to switch SW1A and an inverted version of the first control signal is sent to SW1B.

In one embodiment, the capacitors C1-C7 are implemented as CMOS parallel plate capacitors and the switches are implemented with, for example, CMOS FET devices or NMOS transistors as is well understood. Of course, any number of capacitors and switches, and associated technologies, can be used. Further, the control signals (not shown) could be provided to the module 500 to open and close the switches, via any one of a number of known signaling schemes including, but not limited to, I2C or parallel logic pins or inputs as needed and as is well understood by one of ordinary skill in the art.

Advantageously, if capacitors C3, C6 and C7 are each 50 fF and capacitors C1 and C4 are each 200 fF and capacitors C2 and C5 are each 100 fF, then based on the operation of the switches, the output capacitance can be adjusted in a range from 0 to 393.75 fF in steps of 6.25 fF. Of course, this is just an example and not intended to be limiting.

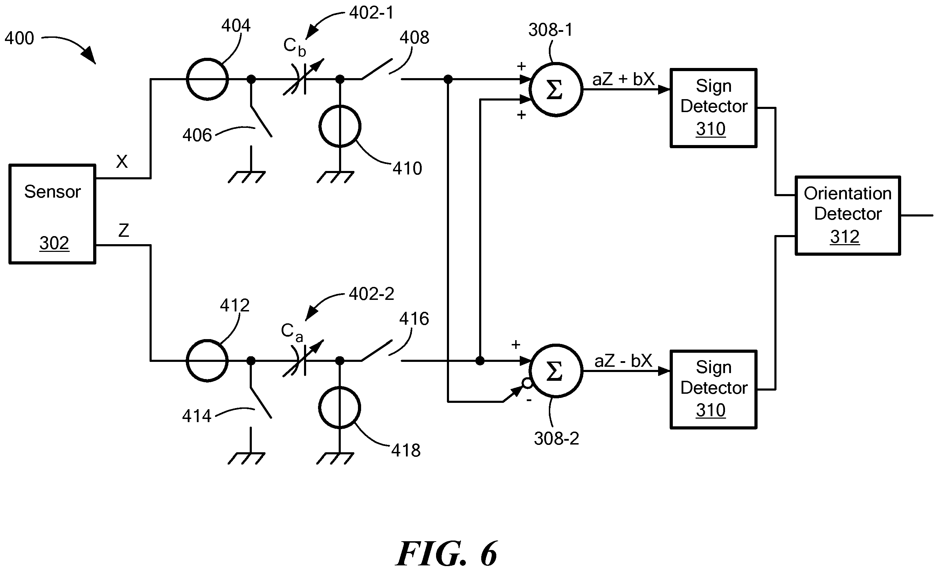

Referring now to Fig. 6, the switches 404-410 and 412-418 are alternately opened and closed in order to build up charge on the sampling capacitors 402-1, 402-2. As shown in Fig. 6, when acquiring charge on the sampling capacitors, switches 404 and 410 are closed while switches 406 and 408 are open. Similarly, switches 412, 418 are closed and switches 414,416 are open in order to build up charge on the second sampling capacitor 402-2. The timing of the opening and closing of the switches is under the control of a device, not shown here, but the operation of which is easily understood by one of ordinary skill in the art.

The charge built up on the sampling capacitors is then transferred to the summers 308-1, 308-2 by opening the switches that are closed and then closing the switches that are open. It should be noted that the switches operate, generally, in a break-before-make mode of operation, as is understood by one of ordinary skill in the art. The control signals of the switches can be provided by a clock generator providing appropriate non-overlapping signals as understood by one of ordinary skill in the art.

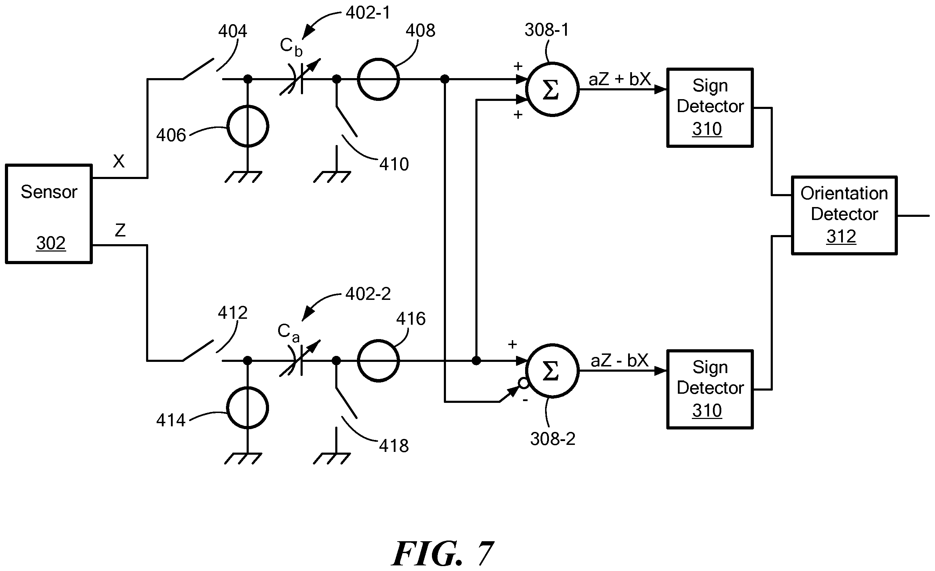

Referring now to Fig. 7, switches 404, 410 are opened and switches 406, 408 are closed while switches 412,418 are opened and switches 414 and 416 are closed. As a result, the charge values on the sampling capacitors are presented to the summers for the tip-over determination as has been described above.

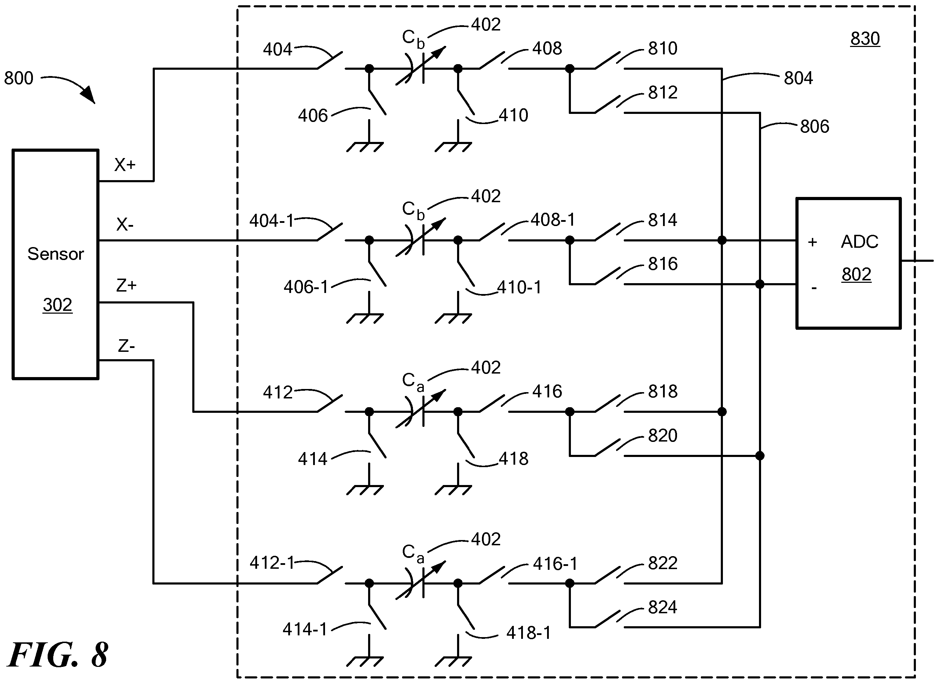

In another embodiment of the present invention, a tip-over sensor apparatus 800, as shown in Fig. 8, includes an analog-to-digital converter (ADC) 802, a positive summing junction (SJP) 804 and a negative summing junction (SJN) 806. The same programmable capacitors, as described above in Fig. 7, and their corresponding switches, are used and function as has already been described. It should be noted that the embodiment shown in Fig. 8 depicts the sensor 302 as having differential X and Z outputs. Such differential outputs are well known to those of ordinary skill in the art and the operations of the previously described embodiments, although described as single-ended signals for convenience, could be easily modified for differential values as is well understood.

In one embodiment of the present invention, the positive and negative summing junctions SJP, SJN and the first and second summers 308-1, 308-2 may be implemented, using analog techniques, with the summing junctions of opamps, as known to one of ordinary skill in the art.

Returning to the tip-over sensor system 800, additional switches 810-824 are provided to couple the charges on the sampling capacitors to either of the positive or negative summing junctions 804, 806 as will be described below.

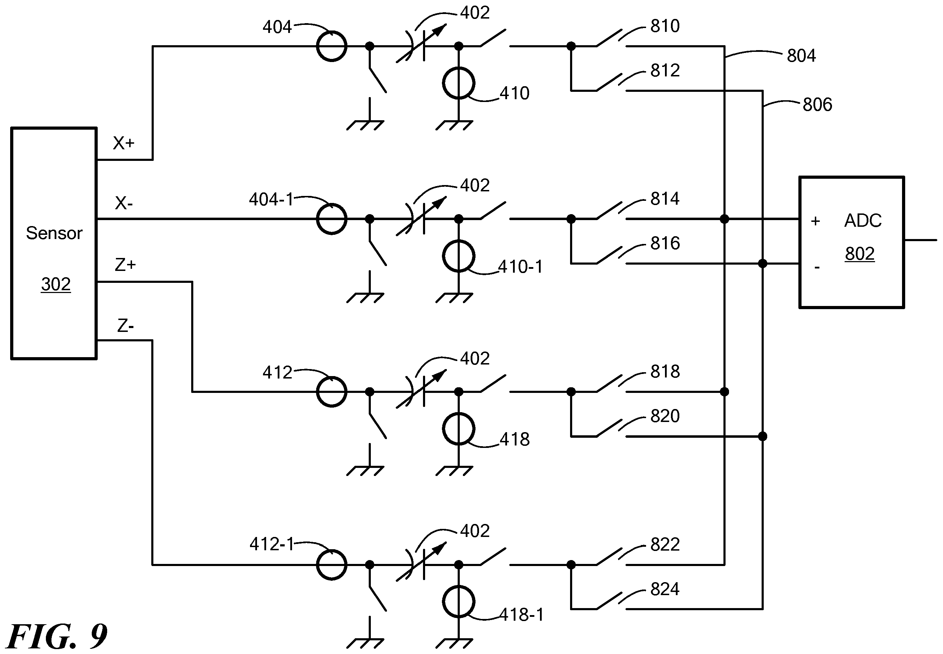

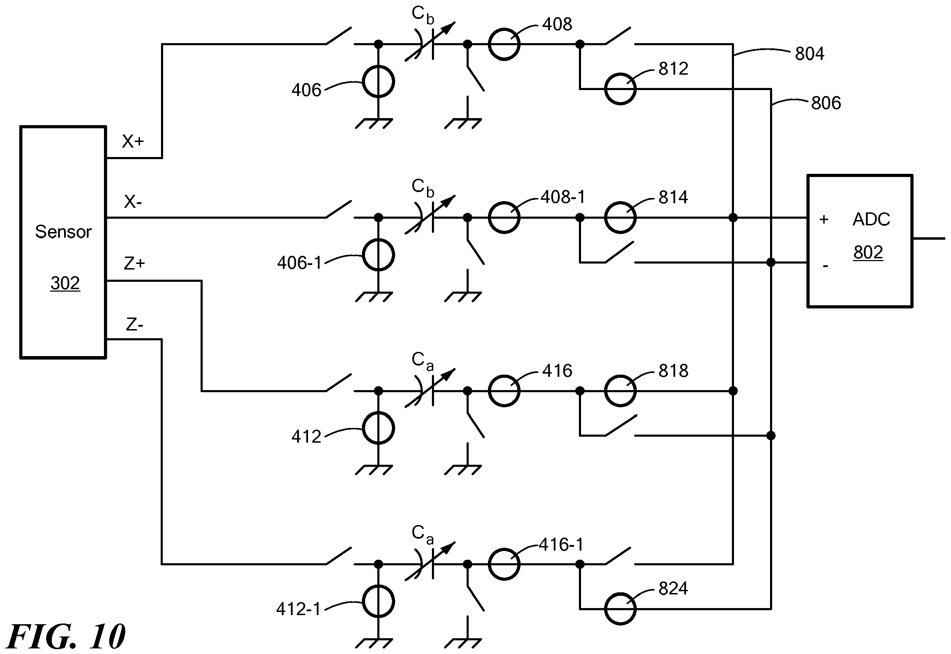

Referring to Fig. 9, switches 404, 404-1, 410, 410-1, 412, 412-1, 418 and 418-1 are closed in order to acquire charge on the sampling capacitors. Subsequently, those switches are opened and switches 406, 406-1, 412, 412-1, 408, 408-1, 416 and 416-1 are closed as shown in Fig. 10. Additionally, as shown in Fig. 9, switches 812 and 824 are closed in order to place the X+ and Z- signals on the negative input of the ADC 802 via the SJN 806. Further, switches 814 and 818 are closed in order to provide the X- and Z+ signal on the positive input of the ADC 802, as shown in Fig. 9. As a result, the calculation of (a*Z- b*X) is determined by the ADC 802 via the SJP 804. One of ordinary skill in the art will understand that one or more switches shown herein may not be necessary and could be removed. The representations herein are exemplary in order to aid in the understanding of the operation of the various embodiments of the present invention and, therefore, the circuits shown are not intended to be limiting.

In one embodiment of the present invention, the operation of the device transitions between the states shown in Figs. 9 and 10 multiple times in order to provide a delta-sigma, or oversampling, operation with the ADC.

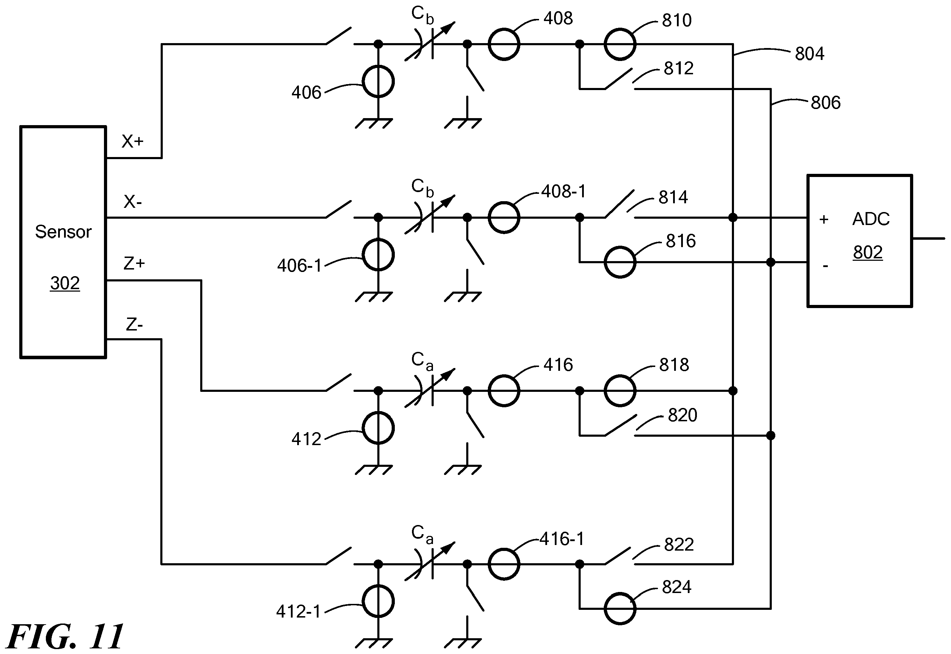

Subsequently, referring to Fig. 11, switches 812 and 814 are opened and switches 810 and 816 are closed. As a result, the X+ signal and the Z+ signal are provided to the positive summing junction 804 and to the plus input of the ADC 802 and the X- and Z- charges are provided onto the negative summing junction 806 and to the negative input of the ADC 802 which then determines the equation a*Z + b*X in order to then determine whether the tip-over threshold angle $\alpha$ has been exceeded.

In operation, the device's states transition from that shown in Fig. 10 to the state shown in Fig. 9 and then to the state shown in Fig. 11. There is a return to the Fig. 9 state in order to recharge the capacitors, i.e., to take another sample of acceleration values, because presenting a capacitor to a summing junction transfers the charge from the capacitor to the junction and, at the end of this process, the capacitor is discharged and has lost its information.

As set forth above, the JSP 804 and JSM 806 are provided as inputs to the ADC 802. The ADC 802 is being used to determine whether the charge values (a*Z - b*X) or (a*Z + b*X) are positive or negative. In operation, the determination may be made by observing the most significant bit (MSB) of the output of the ADC 802. Alternatively, a comparator could be used in place of the ADC.

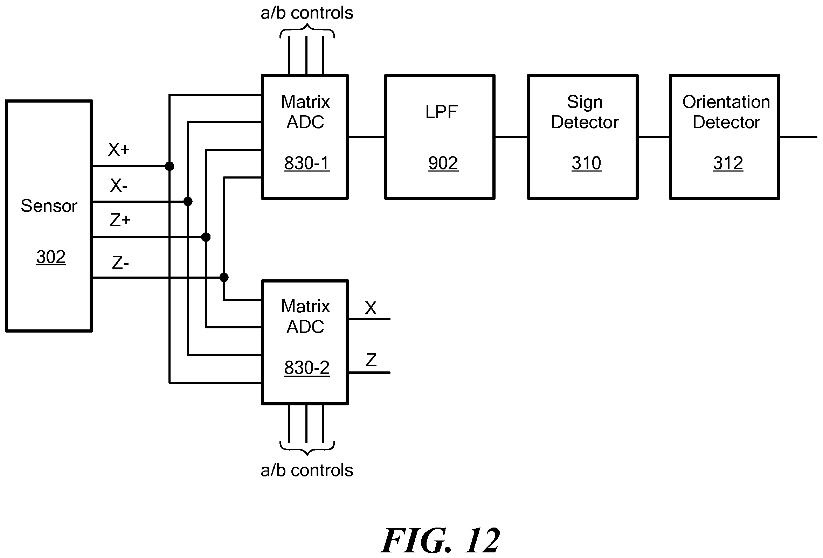

A matrix/ADC module 830 can be defined as including the ADC 802 and the sampling capacitors 402 and the corresponding switches as outlined within the dotted line shown in Fig. 8. As a result, a further embodiment as shown in Fig. 12 includes the differential acceleration sensor 302 feeding the differential X, Z signals to a first matrix/ADC module 830-1 that receives a/b control signals to set the variables a, b in order to determine the tip-over threshold angle, as has been described above, as well as to a second matrix/ADC module 830-2 that receives a separate set of a, b control signals to output the X, Z signals. Here, for the second matrix/ADC module 830-2, the value (a) would be set equal to the value (b) in order to provide the measures of the magnitudes of accelerations in the X and Z-axes.

The output of the first matrix/ADC 830-1 is sent to a digital low-pass filter 902 in order to remove the effects of vibration and other extraneous conditions on the measured signals. Subsequently, the output of the low-pass filter 902 is sent to the sign detector 310 and to the orientation detector 312 to operate as has already been described above.

In an alternate embodiment of the system shown in Fig. 12, the second matrix/ADC module 830-2 is not included. In that case, the tip-over system operates in four phases. During phases one and two, the first matrix/ADC module 830-1 is operated with the values a, b set in the ratio a/b, as described, to calculate the quantities (a*Z-b*X) and (a*Z+b*X) which are then evaluated and the orientation is determined. The first matrix/ADC module 830-1 is then used to measure the X raw acceleration value during phase three when the values a, b are set to 0, 1, respectively, and during phase four the values a, b are set to 1, 0, respectively, to measure the Z-axis acceleration.

Further, instead of two ADCs, a single ADC may be implemented to sequentially measure X, Z, (a*Z-b*X) and (a*Z+b*X). Further still, four ADCs could be used, one for each of the variables or measurements. One of ordinary skill in the art will understand how this would be implemented.

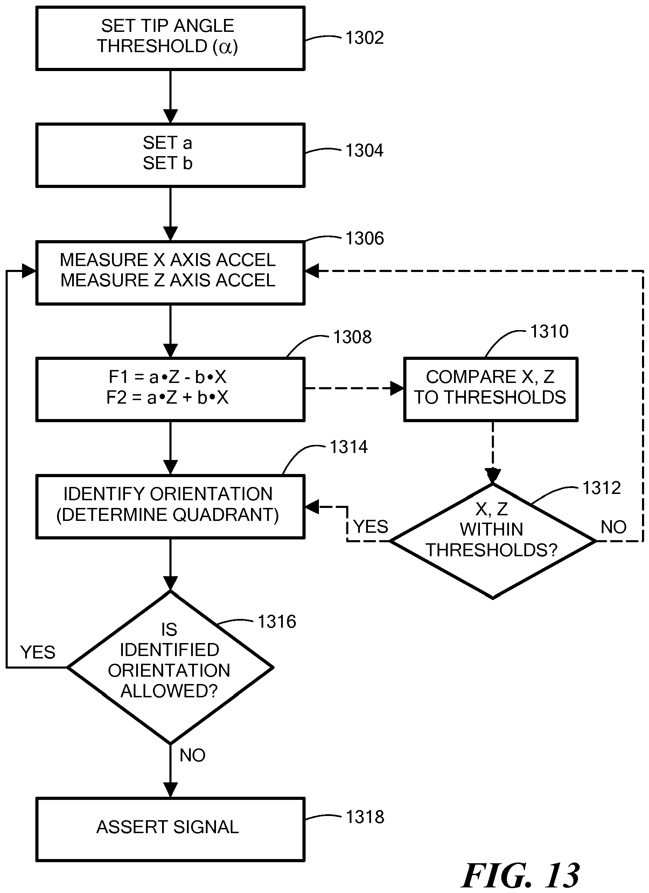

In accordance with a method of operation as shown in Fig. 13, a tip-over threshold angle $\alpha$ is set in step 1302 and as a result the values a, b are set in step 1304. At step 1306, the X- and Z-axis accelerations are measured and the two calculations (a*Z - b*X) and (a*Z + b*X) are calculated in step 1308. Although shown as separate steps 1306, 1308, these occur simultaneously and are only shown separated for explanation purposes. The results of those calculations are each compared to a threshold value, i.e., zero, as described above, in step 1314, where the orientation is identified, i.e., the quadrant is identified by the comparisons of the two equations with zero. Subsequently, in step 1316, if the identified quadrant is determined as being an allowed quadrant, then control passes back to step 1306 for continued measure of the lean angle. If, however, at step 1316 it is determined that the device is now oriented in a "not allowed" quadrant then control passes to step 1318 where a signal indicating such condition may be asserted.

In the application to a motorcycle, one would have a single "allowed" quadrant and consider the remaining three as "prohibited." In the jet ski application, one may also want to have a single "upside down" quadrant as "prohibited," where the three other remaining quadrants are "allowed." In that case, if the sensor is mounted "upside down" and the output polarity is inverted, such a condition can be detected. By identifying the quadrant and then determining whether the identified quadrant is allowed or not, both cases can be implemented.

Returning now to step 1308, in an alternate example, additional steps 1310 and 1312 are inserted between steps 1308 and 1314. In step 1310 the values of the X and Z accelerations are each compared to a threshold level. And if, at step 1312 these values are within the appropriate threshold, then control passes back to step 1314 to compare the tip-over angle calculations. If, however, at step 1312 it is determined that X and Z are not within the appropriate thresholds, then control passes back to step 1306 without a tip-over determination because the X, Z signals are not sufficient.

The determinations in steps 1310, 1312 are provided to make sure that the acceleration signals are valid for determining the tip-over angle. In one embodiment of the present invention, if the larger of the X and Z acceleration value is less than 3/8g, then it is determined that the signals being measured by the sensor are not strong enough to make a valid determination as to the lean angle of the apparatus to which the tip-over angle sensor is connected.

In the foregoing description, one embodiment of the present invention included two variable capacitors that could be programmed with different capacitances. In an alternate embodiment, one of the capacitors may be of a fixed value and the other variable. This will provide a simpler device but may be limited as to the number of different tip-over threshold angles that can be selected.

The embodiments of the present invention may be implemented in a single device, for example, an eight-pin device in an LCC package with inputs and outputs running under, e.g., the I$^2$C protocol. Of course, the necessary I/O components, clock, power and bias generators, signal conditioning, etc., although not described herein, nor needed to understand the present invention, would be included. Advantageously, the values a, b and, therefore, the tip-over threshold angle $\alpha$, could be set via input pins not requiring any operating protocol, and the associated circuitry, thus simplifying the interface. Of course, the values a, b could be pre-set at the factory, and the input pins disabled, in order to provide a device with an already-set tip-over threshold angle $\alpha$. Further, an ASIC may be provided in the device to operate the timing signals for the opening and closing of the switches described above, in addition to the other functions also described above, as well as any I/O operations that might be needed, as is understood by one of ordinary skill in the art.

Further, while the two-axis acceleration sensor has been described, in one embodiment, as being a thermal accelerometer, it is envisioned that other types of acceleration sensors could be used. Still further, two single-axis acceleration sensors may be used. One of ordinary skill in the art would understand how this would be implemented.

Having thus particularly shown and described several features of at least one embodiment of the present invention, it is to be appreciated that various alterations, modifications and improvements will readily occur to those skilled in the art. Such alterations, modifications and improvements are intended to be part of this disclosure and are intended to be within the scope of the invention. Accordingly, the foregoing description and drawings are by way of example only and the scope of the invention should be determined from proper construction of the appended claims.

**Claims**

1. A tip-over sensor (300, 400), comprising:

   an accelerometer (105,302) configured to measure and output an acceleration value Xm along an X-axis and an acceleration value Zm along a Z-axis orthogonal to said X-axis;
   a multiplier (304-1, 304-2) configured to multiply the acceleration value Xm by a first multiplier value b and to multiply the acceleration value Zm by a second multiplier value a and to output b*Xm and a*Zm;
   a summer (308-1, 308-2) coupled to the multiplier (304-1, 304-2) and configured to output a first summed value $F_1$=a*Zm + b*Xm and a second summed value $F_2$=a*Zm-b*Xm; and
   an orientation detector (312) coupled to the summer (308-1, 308-2) and configured to determine if a tip-over threshold angle $\alpha$ has been reached as a function of the first and second summed values $F_1$, $F_2$,
   wherein the first and second multiplier values a and b are chosen as a function of the tip-over threshold angle $\alpha$,
   wherein the summer comprises:

      a first summer (308-1) coupled to the multiplier (304-1, 304-2) and configured to output the first summed value $F_1$; and
      a second summer (308-2) coupled to the multiplier (304-1, 304-2) and configured to output the second summed value $F_2$, and

   wherein the orientation detector (312) comprises:

      a first sign detector (310-1) coupled to the first summer (308-1) and configured to determine a respective sign of the first summed value $F_1$; and
      a second sign detector (310-2) coupled to the second summer (308-2) and configured to determine a respective sign of the second summed value $F_2$,

   wherein the orientation detector (312) is further configured to determine if the tip-over threshold angle $\alpha$ has been reached as a function of the respective signs of the first and second summed values $F_1$, $F_2$; and wherein the multiplier (304-1,304-2) comprises:

      a first value multiplier configured to multiply the acceleration value Xm by a first multiplier value b and to output b*Xm; and
      a second value multiplier configured to multiply the acceleration value Zm by a second multiplier value a and to output a*Zm.

2. The tip-over sensor (300, 400) of claim 1, wherein each of the first and second value multipliers comprises a first and second capacitor (402-1,402-2), respectively.

3. The tip-over sensor (300, 400) of claim 2, wherein:

   the first capacitor (402-1) has a first capacitance value C1; and
   the second capacitor (402-1) has a second capacitance value C2,
   wherein C1/C2=b/a.

4. The tip-over sensor (300, 400) of claim 2, wherein at least one of the first and second capacitors (402-1,402-2) comprises:

   an adjustable capacitor module (500) comprising a plurality of switches and a plurality of fixed value capacitors.

5. The tip-over sensor (300, 400) of claim 2, wherein:

   the first summer (308-1) comprises a first summing junction coupled to each of the first and second capacitors (402-1,402-2); and
   the second summer (308-2) comprises a second summing junction coupled to each of the first and second capacitors (402-1, 402-2).

6. The tip-over sensor (300, 400) of claim 5, further comprising:

a first network of switches coupling the first summing junction to the first capacitor (402-1); and
a second network of switches coupling the second summing junction to the second capacitor (402-2).

7. The tip-over sensor (300, 400) of claim 1, further comprising:

an interface, coupled to the multiplier, configured to receive one or more signals indicating the values of at least one of the first and second multiplier values a and b.

8. The tip-over sensor (300, 400) of claim 7, wherein the interface comprises a plurality of input pins.

9. The tip-over sensor (300, 400) of claim 7, wherein the interface comprises an input pin on which a serial signal is received.

**Patentansprüche**

1. Kippsensor (300, 400), umfassend:

einen Beschleunigungsmesser (105, 302), der konfiguriert ist, eine Ausgabe eines Beschleunigungswerts Xm entlang einer X-Achse und einen Beschleunigungswert Zm entlang einer Z-Achse, rechtwinklig zur X-Achse, zu messen;
einen Multiplikator (304-1, 304-2), der konfiguriert ist, den Beschleunigungswert Xm mit einem ersten Multiplikationswert b zu multiplizieren und den Beschleunigungswert Zm mit einem zweiten Multiplikationswert a zu multiplizieren und b*Xm und a*Zm auszugeben;
einen Summierer (308-1, 308-2), der mit dem Multiplikator (304-1, 304-2) gekoppelt ist und konfiguriert ist, einen ersten summierten Wert $F_1=a*Zm + b*Xm$ und einen zweiten summierten Wert $F_2=a*Zm-b*Xm$ auszugeben; und
einen Ausrichtungsdetektor (312), der mit dem Summierer (308-1, 308-2) gekoppelt ist und konfiguriert ist zu ermitteln, ob ein Kippschwellenwinkel $\alpha$ als eine Funktion der ersten und zweiten summierten Werte $F_1$, $F_2$ erreicht wurde,
wobei die ersten und zweiten Multiplikatorwerte a und b als eine Funktion des Kippschwellenwinkels $\alpha$ gewählt sind,
wobei der Summierer umfasst:

einen ersten Summierer (308-1), der mit dem Multiplikator (304-1, 304-2) gekoppelt ist und konfiguriert ist, den ersten summierten Wert $F_1$ auszugeben;und
einen zweiten Summierer (308-2), der mit dem Multiplikator (304-1, 304-2) gekoppelt ist und konfiguriert ist, den zweiten summierten Wert $F_2$ auszugeben, und

wobei der Ausrichtungsdetektor (312) umfasst:

einen ersten Vorzeichendetektor (310-1), der mit dem ersten Summierer (308-1) gekoppelt ist und konfiguriert ist, ein jeweiliges Vorzeichen des ersten summierten Werts $F_1$ zu ermitteln; und
einen zweiten Vorzeichendetektor (310-2), der mit dem zweiten Summierer (308-2) gekoppelt ist und konfiguriert ist, ein jeweiliges Vorzeichen des zweiten summierten Werts $F_2$ zu ermitteln,
wobei der Ausrichtungsdetektor (312) ferner konfiguriert ist zu ermitteln, ob der Kippschwellenwinkel $\alpha$ als eine Funktion der jeweiligen Vorzeichen der ersten und zweiten summierten Werte $F_1$, $F_2$ erreicht wurde; und wobei

der Multiplikator (304-1, 304-2) umfasst:

einen ersten Wertemultiplikator, der konfiguriert ist, den Beschleunigungswert Xm mit einem ersten Multiplikationswert b zu multiplizieren und b*Xm auszugeben; und
einen zweiten Wertemultiplikator, der konfiguriert ist, den Beschleunigungswert Zm mit einem zweiten Multiplikationswert a zu multiplizieren und a*Zm auszugeben.

2. Kippsensor (300, 400) nach Anspruch 1, wobei jeder der ersten und zweiten Wertemultiplikatoren einen ersten beziehungsweise zweiten Kondensator (402-1, 402-2) umfasst.

**3.** Kippsensor (300, 400) nach Anspruch 2, wobei:

> der erste Kondensator (402-1) einen ersten Kapazitätswert C1 hat; und
> der zweite Kondensator (402-2) einen zweiten Kapazitätswert C2 hat,
> wobei C1/C2=b/a ist.

**4.** Kippsensor (300, 400) nach Anspruch 2,
wobei zumindest einer des ersten und zweiten Kondensators (402-1, 402-2) umfasst:

> ein anpassbares Kondensatormodul (500), das mehrere Schalter und mehrere Festwert-Kondensatoren umfasst.

**5.** Kippsensor (300, 400) nach Anspruch 2, wobei:

> der erste Summierer (308-1) eine erste Summierungsverbindung umfasst, die mit jedem von dem ersten und zweiten Kondensator (402-1, 402-2) gekoppelt ist; und
> der zweite Summierer (308-2) eine zweite Summierungsverbindung umfasst, die mit jedem von dem zweiten und zweiten Kondensator (402-1, 402-2) gekoppelt ist.

**6.** Kippsensor (300, 400) nach Anspruch 5, ferner umfassend:

> ein erstes Netzwerk an Schaltern, das die erste Summierungsverbindung mit dem ersten Kondensator (402-1) koppelt; und
> ein zweites Netzwerk an Schaltern, das die zweite Summierungsverbindung mit dem zweiten Kondensator (402-2) koppelt.

**7.** Kippsensor (300, 400) nach Anspruch 1, ferner umfassend:

> eine Schnittstelle, die mit dem Multiplikator gekoppelt ist, konfiguriert, um ein oder mehr Signale zu empfangen, die die Werte von zumindest einem der ersten und zweiten Multiplikationswerte a und b anzeigen.

**8.** Kippsensor (300, 400) nach Anspruch 7, wobei die Schnittstelle mehrere Eingabestifte umfasst.

**9.** Kippsensor (300, 400) nach Anspruch 7, wobei die Schnittstelle einen Eingabestift umfasst, auf dem ein serielles Signal empfangen wird.

**Revendications**

**1.** Capteur de chavirage (300, 400), comprenant :

> un accéléromètre (105, 302) configuré pour mesurer et délivrer une valeur d'accélération Xm le long d'un axe X et une valeur d'accélération Zm le long d'un axe Z orthogonal au dit axe X ;
> un multiplicateur (304-1, 304-2) configuré pour multiplier la valeur d'accélération Xm par une première valeur de multiplicateur b et pour multiplier la valeur d'accélération Zm par une deuxième valeur de multiplicateur a et pour délivrer b*Xm et a*Zm ;
> un sommateur (308-1, 308-2) couplé au multiplicateur (304-1, 304-2) et configuré pour délivrer une première valeur sommée $F_1$ = a*Zm + b*Xm et une deuxième valeur sommée $F_2$ = a*Zm-b*Xm ; et
> un détecteur d'orientation (312) couplé au sommateur (308-1, 308-2) et configuré pour déterminer si un angle de seuil de chavirage $\alpha$ a été atteint en fonction des première et deuxième valeurs sommées $F_1$, $F_2$,
> dans lequel les première et deuxième valeurs de multiplicateur a et b sont choisies en fonction de l'angle de seuil de chavirage $\alpha$,
> dans lequel le sommateur comprend :
>
> > un premier sommateur (308-1) couplé au multiplicateur (304-1, 304-2) et configuré pour délivrer la première valeur sommée $F_1$ ; et
> > un deuxième sommateur (308-2) couplé au multiplicateur (304-1, 304-2) et configuré pour délivrer la deuxième valeur sommée $F_2$, et

dans lequel le détecteur d'orientation (312) comprend :

un premier détecteur de signe (310-1) couplé au premier sommateur (308-1) et configuré pour déterminer un signe respectif de la première valeur sommée $F_1$ ; et
un deuxième détecteur de signe (310-2) couplé au deuxième sommateur (308-2) et configuré pour déterminer un signe respectif de la deuxième valeur sommée $F_2$,
dans lequel le détecteur d'orientation (312) est en outre configuré pour déterminer si l'angle de seuil de chavirage $\alpha$ a été atteint en fonction des signes respectifs des première et deuxième valeurs sommées $F_1$, $F_2$ ; et dans lequel

le multiplicateur (304-1, 304-2) comprend :

un premier multiplicateur de valeurs configuré pour multiplier la valeur d'accélération Xm par une première valeur de multiplicateur b et pour délivrer b*Xm ; et
un deuxième multiplicateur de valeurs configuré pour multiplier la valeur d'accélération Zm par une deuxième valeur de multiplicateur a et pour délivrer a*Zm.

**2.** Capteur de chavirage (300, 400) selon la revendication 1,
dans lequel chacun des premier et deuxième multiplicateurs de valeurs comprend respectivement des premier et deuxième condensateurs (402-1, 402-2).

**3.** Capteur de chavirage (300, 400) selon la revendication 2, dans lequel :

le premier condensateur (402-1) a une première valeur de capacité C1 ; et
le deuxième condensateur (402-2) a une deuxième valeur de capacité C2,
dans lequel C1/C2=b/a.

**4.** Capteur de chavirage (300, 400) selon la revendication 2, dans lequel au moins l'un des premier et deuxième condensateurs (402-1, 402-2) comprend :

un module de condensateur ajustable (500) comprenant une pluralité de commutateurs et une pluralité de condensateurs de valeur fixe.

**5.** Capteur de chavirage (300, 400) selon la revendication 2, dans lequel :

le premier sommateur (308-1) comprend une première jonction de sommation couplée à chacun des premier et deuxième condensateurs (402-1, 402-2) ; et
le deuxième sommateur (308-2) comprend une deuxième jonction de sommation couplée à chacun des premier et deuxième condensateurs (402-1, 402-2).

**6.** Capteur de chavirage (300, 400) selon la revendication 5, comprenant en outre :

un premier réseau de commutateurs couplant la première jonction de sommation au premier condensateur (402-1) ; et
un deuxième réseau de commutateurs couplant la deuxième jonction de sommation au deuxième condensateur (402-2).

**7.** Capteur de chavirage (300, 400) selon la revendication 1, comprenant en outre :

une interface, couplée au multiplicateur, configurée pour recevoir un ou plusieurs signaux indiquant les valeurs d'au moins l'une des première et deuxième valeurs de multiplicateur a et b.

**8.** Capteur de chavirage (300, 400) selon la revendication 7,
dans lequel l'interface comprend une pluralité de broches d'entrée.

**9.** Capteur de chavirage (300, 400) selon la revendication 7,
dans lequel l'interface comprend une broche d'entrée sur laquelle un signal en série est reçu.

Direction into Figure Plane is "Normal" Riding Position

*FIG. 1*

TILT

Z

TOP

$$\left\{ \begin{array}{l} a \cdot Z - b \cdot X > 0 \\ a \cdot Z + b \cdot X > 0 \end{array} \right\}$$

$-\alpha$     $+\alpha$

LEFT

$$\left\{ \begin{array}{l} a \cdot Z - b \cdot X > 0 \\ a \cdot Z + b \cdot X < 0 \end{array} \right\}$$

$$\left\{ \begin{array}{l} a \cdot Z - b \cdot X < 0 \\ a \cdot Z + b \cdot X > 0 \end{array} \right\}$$

RIGHT

X

$$\left\{ \begin{array}{l} a \cdot Z - b \cdot X < 0 \\ a \cdot Z + b \cdot X < 0 \end{array} \right\}$$

BOTTOM

*FIG. 2*

*FIG. 3*

**FIG. 4**

EP 3 008 422 B1

**FIG. 5**

**FIG. 6**

**FIG. 7**

EP 3 008 422 B1

FIG. 8

EP 3 008 422 B1

**FIG. 9**

EP 3 008 422 B1

*FIG. 10*

**FIG. 11**

**FIG. 12**

EP 3 008 422 B1

SET TIP ANGLE
THRESHOLD (α) —— 1302

SET a
SET b —— 1304

MEASURE X AXIS ACCEL
MEASURE Z AXIS ACCEL —— 1306

F1 = a•Z - b•X
F2 = a•Z + b•X —— 1308

COMPARE X, Z
TO THRESHOLDS —— 1310

IDENTIFY ORIENTATION
(DETERMINE QUADRANT) —— 1314

X, Z
WITHIN
THRESHOLDS? —— 1312
YES    NO

IS
IDENTIFIED
ORIENTATION
ALLOWED? —— 1316
YES    NO

ASSERT SIGNAL —— 1318

*FIG. 13*

**EP 3 008 422 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008185513 A
- DE 102008042006 A1
- US 2004172838 A1
- US 5493909 A